# DEMANDE DE BREVET EUROPEEN

(11) **EP 3 245 914 A1**
(43) Date de publication de la demande: **22.11.2017**
(21) Numéro de dépôt: 16170453.1
(22) Date de dépôt: 19.05.2016
(51) Int. Cl.: A47J 27/08

(54) **SYSTEME D'OUVERTURE ET DE FERMETURE POUR AUTOCUISEUR**

(71) Demandeur: LAGOSTINA S.p.A., 28887 Omegna (VB) (IT)
(72) Inventeur: MILANESI, Fausto, 28831 BAVENO (VB) (IT)
(74) Mandataire: Bourrières, Patrice

(57) **Abrégé**

La présente invention concerne un système d'ouverture et de fermeture pour autocuiseur à couvercle rentrant comprenant :
- un couvercle (2), mobile entre au moins une position de fermeture et une position d'ouverture;
- un levier (1) de commande du déplacement du couvercle (2), mobile,en rotation entre une première position correspondant à la position de fermeture du couvercle (2) et au moins une seconde position correspondant à la position d'ouverture dudit couvercle (3); le levier (1) étant muni d'une came (8),
- un verrou (6), mobile entre une position engagée dans laquelle le verrou tend à maintenir le levier (1) dans la première position et une position désengagée dans laquelle le levier (1) peut tourner librement ;
- un organe de rappel (7) ramenant le verrou dans la position engagée contre la came (8), le verrou (6) générant ainsi une force de maintien de la came (8) pour maintenir le levier (1) dans la première position.

Selon l'invention, la came (8) et le verrou (6) sont configurés de telle sorte que lorsqu'un couple supérieur à une valeur prédéterminée est appliqué sur le levier (1), la came (8) applique sur le verrou (6) une force supérieure à la force de maintien et le levier (1) tourne de la première position à la seconde position, la came (8) repoussant le verrou (6) contre l'action de l'organe de rappel (7), qui se déplace alors de la position engagée à la position désengagée.

## Description

La présente invention concerne des autocuiseurs, c'est-à-dire les appareils de cuisson sous pression comprenant une cuve et un couvercle, notamment un couvercle rentrant, configuré pour fermer la cuve en coopérant avec un bord supérieur circulaire de la cuve.

La présente invention concerne, plus particulièrement, un système d'ouverture et de fermeture pour autocuiseur et, en outre, un autocuiseur comprenant le système d'ouverture et de fermeture.

Plus précisément, l'objet de la présente invention est un système d'ouverture et de fermeture du type dit «à levier». Les systèmes de ce type comprennent :
- un couvercle mobile entre au moins une position de fermeture dans laquelle ledit couvercle est apte à coopérer avec une cuve pour former un autocuiseur étanche et une position d'ouverture dans laquelle le couvercle permet que l'intérieur de la cuve communique avec l'extérieur ;
- une soupape de régulation de la pression;
- un élément transversal positionné au dessus du couvercle ;
- des moyens de commande du système d'ouverture et de fermeture ;
- des moyens de sécurité comprenant notamment une soupape de sécurité à la surpression et un moyen de sécurité à l'ouverture.

Les moyens de commande comprennent habituellement :
- un verrou ;
- un ressort relié au verrou;
- un levier formant une poignée de commande du déplacement du couvercle (2) entre ses positions de fermeture et d'ouverture, mobile en rotation entre une première position correspondant à la position de fermeture du couvercle (2) et au moins une seconde position correspondant à la position d'ouverture dudit couvercle (2), une extrémité du levier étant pourvue d'une came.

La came est conformée de manière à coopérer avec le verrou ; plus particulièrement, la came comporte une face de blocage qui coopère avec un crochet du verrou pour immobiliser le levier dans sa première position.

Les systèmes d'ouverture et de fermeture de l'état de la technique décrits ci-dessus peuvent passer de la position de fermeture à la position d'ouverture en effectuant les opérations suivantes :
- le levier doit être tourné de manière à se rapprocher de l'élément transversal en exerçant une force verticale dirigée vers le bas pour supprimer l'effort de la face de blocage sur le crochet du verrou ;
- le verrou doit être déplacé horizontalement par l'utilisateur, en comprimant le ressort. La came est libérée ainsi que le levier ;
- le levier doit être tourné en l'éloignant de l'élément transversal vers la seconde position (c'est-à-dire dans le sens opposé par rapport au sens dans lequel le levier a été préalablement tourné). Ainsi, le couvercle est en position d'ouverture.

En résumé, pour changer le système de la position de fermeture à la position d'ouverture, deux rotations du levier doivent être effectuées, en plus du déplacement du verrou.

Avec un tel type de système, l'utilisateur, en particulier l'utilisateur plus faible et peu expérimenté, peut éprouver une certaine difficulté à ouvrir l'autocuiseur.

L'objet de la présente invention est par conséquent de proposer un système d'ouverture et de fermeture pour autocuiseur qui rend ce dernier plus facile à utiliser, grâce à un actionnement plus doux et plus fluide du levier de commande, de manière à ce que l'ouverture et la fermeture de l'autocuiseur soient simples et sans effort, même pour l'utilisateur plus faible et peu expérimenté.

L'objet de la présente invention est également de proposer un système d'ouverture et de fermeture pour autocuiseur avec un nombre réduit de composants, ce qui réduit la complexité structurelle de l'ensemble de l'autocuiseur et facilite l'entretien de celui-ci.

La présente invention vise également à proposer un système d'ouverture et de fermeture pour autocuiseur, dont les éléments sont caractérisés par une conception plus simple que ceux de l'état antérieur de la technique, de manière à rendre la production du système proposé moins complexe et moins coûteuse.

Enfin, la présente invention propose un système d'ouverture et de fermeture présentant un fonctionnement plus sûr.

Tous ces objectifs sont atteints par un système d'ouverture et de fermeture pour autocuiseur à couvercle rentrant comprenant :
- un couvercle, mobile entre au moins une position de fermeture dans laquelle ledit couvercle est apte à coopérer avec une cuve pour former un autocuiseur étanche et une position d'ouverture dans laquelle le couvercle permet que l'intérieur de la cuve communique avec l'extérieur,
- un levier de commande du déplacement du couvercle entre ses positions de fermeture et d'ouverture, mobile en rotation entre une première position correspondant à la position de fermeture du couvercle et au moins une seconde position correspondant à la position d'ouverture dudit couvercle; le levier étant muni d'une came,
- un verrou mobile entre une position engagée dans laquelle le verrou tend à maintenir le levier dans la première position et une position désengagée dans laquelle le levier peut tourner librement,
- un organe de rappel ramenant le verrou dans la position engagée contre la came, le verrou générant ainsi une force de maintien sur la came pour maintenir le levier dans la première position,
caractérisé en ce que la came et le verrou sont configurés de telle sorte que lorsqu'un couple supérieur à une valeur prédéterminée est appliqué sur le levier pour le faire passer de la première position à la seconde position, la came applique sur le verrou une force supérieure à la force de maintien et le levier tourne de la première position à la seconde position, la came repoussant le verrou contre l'action de l'organe de rappel, qui se déplace alors de la position engagée à la position désengagée.

Le système d'ouverture et de fermeture de la présente invention peut passer de la position de fermeture à la position d'ouverture en effectuant une opération unique, décrite ci-après :
- le levier doit être tourné de la première position à la seconde position. Ce faisant, le verrou est poussé par la came elle-même. Le verrou est alors désengagé et le levier est libre de tourner davantage, provoquant ainsi l'ouverture du couvercle et donc de l'autocuiseur.

Par conséquent, le système est capable de passer de la position de fermeture à la position d'ouverture du couvercle au moyen d'un mouvement unique et continu du levier.

Pour passer de la position d'ouverture à la position de fermeture du couvercle, le levier tourne depuis la seconde position vers la première position, la came pousse le verrou, le verrou se déplace alors de la position désengagée à la position engagée.

De façon avantageuse, l'organe de rappel comprend un ressort.

De préférence, le verrou est pourvu d'un logement et la came est pourvue d'une dent configurée pour s'engager dans ledit logement lorsque le levier est dans la première position et le verrou est dans la position engagée.

Ainsi, lorsque le verrou est en position engagée, le logement du verrou, sous l'action de l'organe de rappel, applique un effort de maintien sur la dent de la came et tend à retenir par conséquent le levier dans la première position. Un couple supérieur à une valeur prédéterminée doit être appliqué sur le levier pour faire tourner celui-ci de la première position à la seconde position et provoquer le déplacement de la dent hors du logement.

Par dent, on comprend une protubérance présentant une forme arrondie, complémentaire de la forme du logement.

On comprend que la came pourvue d'un logement et le verrou pourvu d'une dent configurée pour s'engager dans ledit logement est un équivalent.

De façon avantageuse, le logement comprend une paroi concave.

Ainsi, la paroi concave peut coopérer avec une dent ayant une forme ronde lorsque le verrou est dans la position engagée. Dans une version simplifiée, la paroi concave peut se limiter à une paroi inclinée.

De préférence, la came est munie d'une partie adjacente à la dent et le verrou est muni d'une paroi inclinée configurée de telle sorte que, lorsque le levier pivote de la première position à la seconde position, cette partie pousse la paroi inclinée.

De façon avantageuse, le système comporte un moyen de sécurité à l'ouverture mobile entre une position activée tant que la pression régnant dans l'autocuiseur est supérieure à une valeur prédéterminée et une position désactivée tant que la pression régnant dans l'enceinte est inférieure à une valeur prédéterminée

De préférence, le verrou comprend un logement pour recevoir le moyen de sécurité à l'ouverture dans la position activée, le moyen de sécurité à l'ouverture en position activée bloquant le verrou dans la position engagée.

Ainsi, le levier ne peut plus tourner de la première position vers la seconde position lorsque le moyen de sécurité à l'ouverture se trouve dans une position activée correspondant à une pression régnant dans l'enceinte supérieure à une valeur prédéterminée.

De façon avantageuse, le système comporte un élément transversal comprenant un logement de réception du moyen de sécurité à l'ouverture.

De préférence, le système comporte une soupape de sécurité à la surpression agencée sur l'élément transversal.

De façon avantageuse, le système comprend une soupape de régulation de la pression agencée sur l'élément transversal.

De préférence, l'élément transversal comprend une partie de prolongement, la partie de prolongement comprenant un logement pour ladite soupape de régulation de la pression.

De façon avantageuse, la partie de prolongement est positionnée perpendiculairement à l'élément transversal.

De préférence, la soupape de régulation de la pression est une soupape à poids ou une soupape à ressort.

La présente invention concerne également un autocuiseur comprenant un système d'ouverture et de fermeture tel que décrit précédemment.

Ces caractéristiques et d'autres apparaîtront plus clairement à l'aide de la description détaillée qui suit de deux modes de réalisation privilégiés de l'invention, à lire à titre d'exemples non limitatifs du principe plus général revendiqué.

La description se réfère aux dessins annexés, dans lesquels :
- La figure 1 montre une vue latérale en coupe du système d'ouverture et de fermeture selon la présente invention, dans la position de fermeture ;
- La figure 2 représente une vue latérale en coupe du système d'ouverture et de fermeture selon la présente invention, lors de l'opération de basculement de la position de fermeture à la position d'ouverture ;
- La figure 3 montre une vue latérale en coupe du système d'ouverture et de fermeture selon la présente invention, dans la position d'ouverture ;
- La figure 4 est une vue en perspective d'un premier mode de réalisation du système d'ouverture et de fermeture selon la présente invention ;
- La figure 5 est une vue en perspective d'un deuxième mode de réalisation du système d'ouverture et de fermeture selon la présente invention.

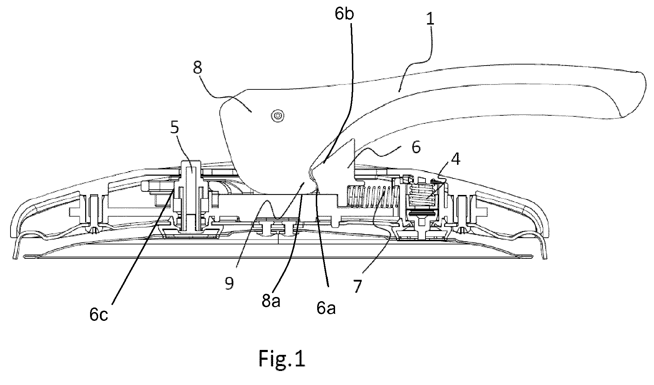

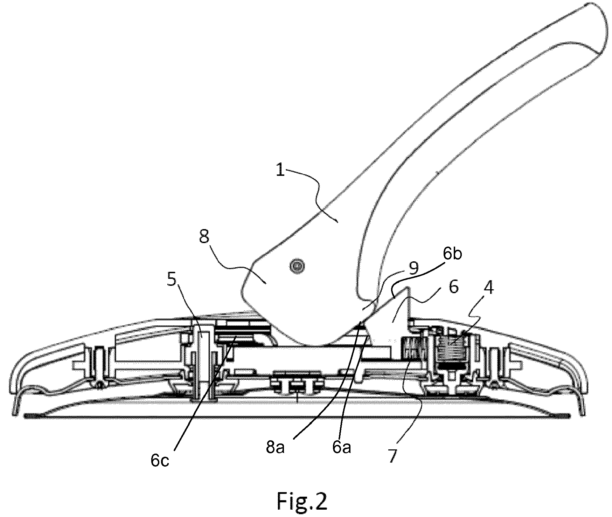

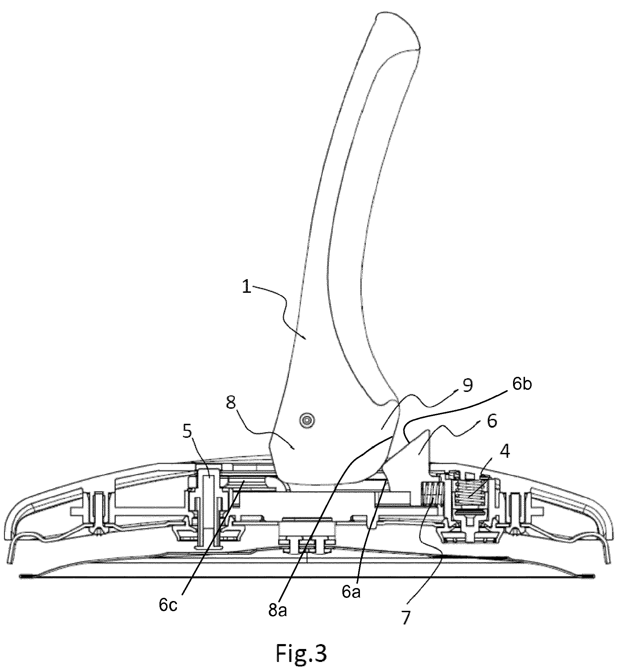

En se référant aux figures 1, 2 et 3, le système d'ouverture et de fermeture selon la présente invention comprend :
- un couvercle 2, mobile entre au moins une position de fermeture dans laquelle ledit couvercle 2 est apte à coopérer avec un cuve pour former un autocuiseur étanche et une position d'ouverture dans laquelle le couvercle 2 permet que l'intérieur de la cuve communique avec l'extérieur ;
- un levier 1, monté de manière à se déplacer entre une première position correspondant à la position de fermeture du couvercle 2 et une seconde position correspondant à la position d'ouverture du couvercle 2 ;
- un élément transversal 3 ;
- des moyens de sécurité 4, 5 comprenant une soupape de sécurité à la surpression 4 et un moyen de sécurité à l'ouverture 5 ;
- une soupape de régulation de la pression 19 ;
- un verrou 6 ;
- un ressort 7 relié au verrou 6.

Le levier 1 est muni d'une came 8 configurée de manière à coopérer avec le verrou 6. Plus particulièrement, la partie de la came 8 se trouvant à proximité du verrou 6 présente un profil complémentaire à la forme du verrou 6. En effet, la came est pourvue d'une dent 9 qui entre en prise et libère un logement 6a du verrou 6 pendant l'opération de fermeture et d'ouverture, respectivement.

Lorsque le système est fermé, c'est-à-dire lorsque le couvercle 2 est en position de fermeture et que le levier 1 est à la première position, le ressort 7 relié au verrou 6 est déployé et le verrou 6 entre en prise avec la came 8, et plus particulièrement le logement 6a du verrou 6 entre en prise avec la dent 9 de la came 8. Pour faire passer le système de la position de fermeture à la position d'ouverture, l'opération suivante doit être réalisée : le levier 1 doit être tourné de manière à éloigner le levier 1 de l'élément transversal 3. En se référant aux figures 1, 2 et 3, afin d'atteindre la position d'ouverture, le levier 1 doit être tourné dans le sens contraire des aiguilles d'une montre. Alors que le levier est tourné de cette façon, le verrou 6 est poussé par la dent 9 de la came 8, de sorte que le ressort 7 est comprimé et le verrou 6 s'éloigne de la came 8. Si le levier 1 est tourné davantage, le verrou 6 est libéré et le couvercle 2 est ouvert.

Le verrou 6 comprend un logement 6c pour recevoir un moyen de sécurité à l'ouverture 5 dans la position activée pour bloquer le verrou 6 dans la position engagée.

Pour faire passer le système de la position d'ouverture à la position de fermeture, l'action suivante doit être réalisée : le levier 1 doit tourner dans le sens opposé par rapport au sens de rotation de la position de fermeture à la position d'ouverture. En se référant aux figures 1, 2 et 3, afin d'atteindre la position de fermeture, le levier 1 doit être tourné dans le sens des aiguilles d'une montre. Au cours de cette rotation, lorsque la dent 9 de la came 8 entre en prise avec le verrou 6, ledit verrou 6 est poussé par la came 8, de sorte que le ressort 7 est davantage comprimé et le verrou 6 se remet dans sa position initiale d'engagement avec la dent 9 de la came 8. Ainsi, la dent 9 entre de nouveau en prise avec le logement 6a du verrou 6 et le ressort 7 est déployé. Lorsqu'une pression se développe dans l'autocuiseur, le moyen de sécurité à l'ouverture 5 se trouve dans une position activée dans le logement 6c du verrou 6. Ainsi, le verrou 6 est immobilisé et le levier 1 ne peut plus tourner de la première position à la seconde position.

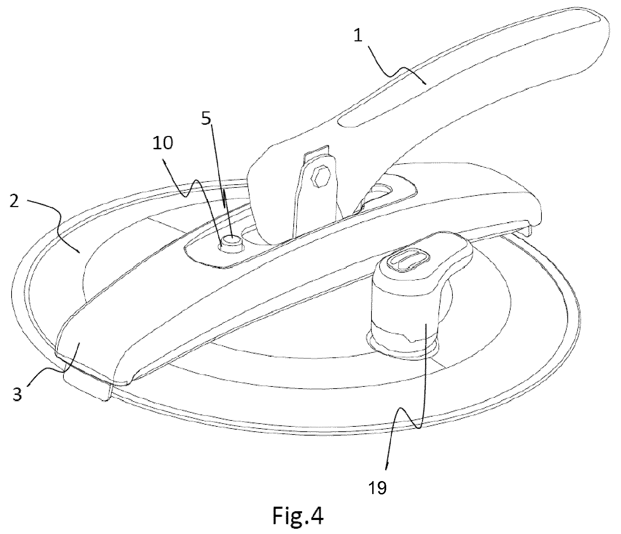

En se référant à la figure 4, un premier mode de réalisation de la présente invention est décrit, dans lequel l'élément transversal 3 comprend un logement 10 pour le moyen de sécurité à l'ouverture 5.

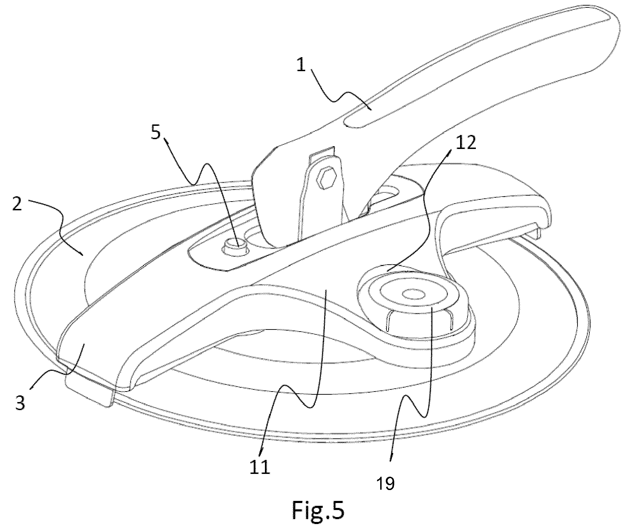

En se référant à la figure 5, un deuxième mode de réalisation de la présente invention est décrit, dans lequel l'élément transversal 3 comprend une partie de prolongement 11 positionnée, de préférence, perpendiculairement à l'élément transversal 3. La partie de prolongement 11 comporte un logement 12 pour la soupape de régulation de la pression 19. La soupape de régulation de la pression 19 peut être une soupape à poids ou une soupape à ressort.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Dans une variante de réalisation non représentée, la came est pourvue d'un logement et le verrou est pourvu d'une dent configurée pour s'engager dans ledit logement.

## Revendications

1. Système d'ouverture et de fermeture pour autocuiseur à couvercle rentrant comprenant :
- un couvercle (2), mobile entre au moins une position de fermeture dans laquelle ledit couvercle (2) est apte à coopérer avec une cuve pour former un autocuiseur étanche et une position d'ouverture dans laquelle le couvercle (2) permet que l'intérieur de la cuve communique avec l'extérieur ;
- un levier (1) de commande du déplacement du couvercle (2) entre ses positions de fermeture et d'ouverture, mobile,en rotation entre une première position correspondant à la position de fermeture du couvercle (2) et au moins une seconde position correspondant à la position d'ouverture dudit couvercle (3); le levier (1) étant muni d'une came (8),
- un verrou (6), mobile entre une position engagée dans laquelle le verrou tend à maintenir le levier (1) dans la première position et une position désengagée dans laquelle le levier (1) peut tourner librement ;
- un organe de rappel (7) ramenant le verrou dans la position engagée contre la came (8), le verrou générant ainsi une force de maintien de la came (8) pour maintenir le levier (1) dans la première position,
**caractérisé en ce que** la came (8) et le verrou (6) sont configurés de telle sorte que lorsqu'un couple supérieur à une valeur prédéterminée est appliqué sur le levier (1) pour le faire passer de la première position à la seconde position, la came (8) applique sur le verrou (6) une force supérieure à la force de maintien et le levier (1) tourne de la première position à la seconde position, la came (8) repoussant le verrou (6) contre l'action de l'organe de rappel (7), qui se déplace alors de la position engagée à la position désengagée.

2. Système selon la revendication 1, **caractérisé en ce que** l'organe de rappel comprend un ressort (7).

3. Système selon l'une quelconque des revendications précédentes, **caractérisé en ce que** le verrou (6) est pourvu d'un logement (6a) et dans lequel la came (8) est pourvue d'une dent (9) configurée de manière à s'engager dans le logement (6a) lorsque le levier (1) est dans la première position et le verrou (6) est dans la position engagée.

4. Système selon la revendication 3, **caractérisé en ce que** le logement comprend une paroi concave (6a).

5. Système selon l'une quelconque des revendications 3 ou 4, **caractérisé en ce que** la came (8) est munie d'une partie (8a) adjacente à la dent (9) et dans laquelle le verrou (6) est muni d'une paroi inclinée (6b) configurée de telle sorte que, lorsque le levier (1) pivote de la première position à la seconde position, cette partie (8a) pousse la paroi inclinée (6b).

6. Système selon l'une quelconque des revendications précédentes, **caractérisé en ce qu'**il comporte un moyen de sécurité à l'ouverture (5) mobile entre une position activée tant que la pression régnant dans l'autocuiseur est supérieure à une valeur prédéterminée et une position désactivée tant que la pression régnant dans l'enceinte est inférieure à une valeur prédéterminée.

7. Système selon la revendication 6, **caractérisé en ce que** le verrou (6) comprend un logement (6c) pour recevoir le moyen de sécurité à l'ouverture (5) dans la position activée, le moyen de sécurité à l'ouverture (5) en position activée bloquant le verrou (6) dans la position engagée.

8. Système selon l'une quelconque des revendications 6 ou 7, **caractérisé en ce qu'**il comporte un élément transversal (3) comprenant un logement (10) de réception du moyen de sécurité à l'ouverture (5).

9. Système selon la revendication 8, **caractérisé en ce qu'**il comporte une soupape de sécurité à la surpression (4) agencée sur l'élément transversal.

10. Système selon l'une quelconque des revendications 8 ou 9, **caractérisé en ce que** ledit système comprend une soupape de régulation de la pression (19) agencée sur l'élément transversal.

11. Système selon la revendication 10, **caractérisé en ce que** l'élément transversal (3) comprend une partie de prolongement (11), la partie de prolongement (11) comprenant un logement (12) pour la soupape de régulation de la pression (19).

12. Système selon la revendication précédente, **caractérisé en ce que** la partie de prolongement (11) est positionnée perpendiculairement à l'élément transversal (3).

13. Système selon les revendications 10 à 12, **caractérisé en ce que** la soupape de régulation de la pression (19) est une soupape à poids ou une soupape à ressort.

14. Autocuiseur comprenant un système d'ouverture et de fermeture selon l'une quelconque des revendications précédentes.
